# EUROPÄISCHE PATENTSCHRIFT

(11) **EP 3 376 189 B1**
(45) Veröffentlichungstag und Bekanntmachung des Hinweises auf die Patenterteilung: **27.05.2020**
(21) Anmeldenummer: 18160312.7
(22) Anmeldetag: 06.03.2018
(51) Int. Cl.: G01K 3/10, G01K 3/14, G01K 17/20, G08B 13/08, F24F 110/10, F24F 11/30

(54) **SENSORENSYSTEM ZUR DETEKTION VON ENTSTEHENDEN LUFT- ODER WÄRMESTRÖMUNGEN, BEDINGT DURCH GEÖFFNETE FENSTER, TÜREN UND/ ODER ANDERE VERSCHLIESSBARE ÖFFNUNGEN IN EINEM GEBÄUDERAUM**
SENSOR SYSTEM FOR DETECTING AIR OR HEAT FLOWS DUE TO OPEN WINDOW, DOORS AND/OR OTHER CLOSABLE OPENINGS IN A BUILDING ROOM
SYSTÈME DE CAPTEURS DESTINÉ À DÉTECTER DES COURANTS D'AIR OU DE CHALEUR PRODUITS LORS DE L'OUVERTURE DES FENÊTRES, DES PORTES ET/OU D'AUTRES OUVERTURES POUVANT ÊTRE FERMÉES DANS UN ESPACE INTÉRIEUR DE BÂTIMENT

(30) Priorität: 14.03.2017 DE 102017105388
(43) Veröffentlichungstag der Anmeldung: 19.09.2018
(73) Patentinhaber: ABB Schweiz AG, 5400 Baden (CH)
(72) Erfinder: Gebhardt, Jörg, 55130 Mainz (DE); Ahrend, Ulf, 76185 Karlsruhe (DE); Kruse, Jörn, 68239 Mannheim (DE); Rodenbusch-Mohr, Thomas, 68161 Mannheim (DE); Kaul, Holger, 68165 Mannheim (DE); Mendoza Cervantes, Francisco, 76131 Karlsruhe (DE); Sosale, Guruprasad, 69469 Weinheim (DE); Decker, Andreas, 64293 Darmstadt (DE)
(74) Vertreter: Marks, Frank

(56) Entgegenhaltungen:
- EP-A1- 1 160 552
- WO-A1-2016/198681
- GB-A- 2 434 019
- GB-A- 2 462 596

## Beschreibung

Die Erfindung betrifft ein Sensorsystem zur Detektion von in Gebäuderäumen entstehenden Luft- oder Wärmeströmungen, bedingt durch geöffnete Fenster, Türen und/oder andere verschließbare Öffnungen im Gebäude gemäß den Merkmalen des Anspruches 1.

In Gebäuden ist eine Detektion von geöffneten Fenstern und Türen zur Regulierung des Raumklimas, zur Energieeinsparung und zur Überwachung von unbefugtem Eindringen in das Gebäude eine wichtige Funktion, die von der Gebäudetechnik zu realisieren ist. Dazu werden üblicherweise spezielle Fensteröffnungssensoren eingesetzt, die mittels ihrer elektrischen Kontakte oder als kontaktlose elektromagnetische Sensoren ein geöffnetes Fenster detektieren. Diese Sensoren werden an jedem einzelnem zu überwachenden Fenster angebracht und sind für ihre Energieversorgung und Kommunikation mit übergeordneten Einheiten oftmals mit einer aufwendigen Verdrahtung versehen.

In den letzten Jahren werden mehr und mehr drahtlose Lösungen zur Detektion von geöffneten Fenstern angeboten, deren Sensoren auf einer autarken Energieversorgung, beispielsweise mittels Batterien, basieren und für die Kommunikation mit der übergeordneten Einheit die Funktechnologie nutzen. Diese Lösungen sind jedoch, bedingt durch die eingesetzten Sensoren sowie deren Installation und Inbetriebnahme, kostenintensiv. Auch ist eine regelmäßige Wartung, insbesondere der in den Sensoren eingesetzten Batterien erforderlich.

Für eine vereinfachte Fensteröffnungsidentifikation sind weiterhin Heizkörperthermostate bekannt, wie der programmierbare Heizkörperregler Rondostat Comfort+ HR30 der Firma Honeywell, welche bei gemessenen schnellen Temperaturänderungen davon ausgehen, dass ein Fenster offen steht und dann den Heizkörper entsprechend abschalten.

Aus Dimitris Sklavounos, Evangelos Zervas, Odysseas Tsakiridis, John Stonham; A subspace identification method for detecting abnormal behavior in HVAC systems: Hindawi Journal of Energy, Vol. 15 (Article ID 693749), 2015 (siehe http://dx.doi.org/ 10.1155/2015/693749)" sind Sensornetzwerke mit einem im Raum angeordnetem Sensor bekannt, welche ein Konzept für ein Gebäude aufgrund regelungstechnischer Betrachtungen, insbesondere mithilfe von Beobachter-Ansätzen, nutzen.

Diese Sensornetzwerke benötigen jedoch ein umfassendes Gebäudemodell. Unter anderem müssen dazu auch Leistungsdaten des Heizungs-/Lüftungssystems bereitgestellt werden, um modellbasiert für das Gesamtgebäude Rückschlüsse auf offene Fenster oder andere verschließbare Gebäudeöffnungen des Heizungs-/Lüftungssystems ziehen zu können.

GB 2 462 596 A offenbart einen temperatursensitiven Alarm, der zeitliche Variationen der Umgebungstemperatur messen kann. Hierzu umfasst der Alarm einen Temperatursensor. Basierend auf der zeitlichen Variation der Umgebungstemperatur wird der Alarm gesteuert, wobei eine Verzögerung des Alarms vorgesehen ist, wodurch der Alarm nicht durch einen Luftstrom eines Öffnen eines Fensters oder einer Tür getriggert wird.

EP 1 160 552 A1 offenbart ein Verfahren und eine Vorrichtung zur Erkennung einer Fensterlüftung. Hierzu wird die zu untersuchende Temperatur und/oder Strömungsgeschwindigkeit über der Zeit gemessen und hieraus ein mittlerer Verlauf der Temperatur und/oder der Strömungsgeschwindigkeit ermittelt und die Amplitude und/oder die Frequenz der Abweichungen von dem mittleren Verlauf der Temperatur und/oder Strömungsgeschwindigkeit analysiert.

GB 2 434 019 A offenbart ein temperatursensitives Alarmsystem. Die Temperatur des Raumes wird über die Zeit betrachtet und ein Alarm durch eine Verzögerungsfunktion gesteuert, sodass ein falscher Alarm durch einen Luftzug durch Öffnen und Schließen einer Tür oder kurzfristiges Öffnen eines Fensters nicht ausgelöst wird. Der Erfindung liegt die Aufgabe zugrunde, ein Sensorsystem zur Positionsbestimmung von Fenstern oder Türen in einem Gebäude bereitzustellen, welche eine Detektion geöffneter Fenster oder Türen in einfacher, wartungsarmer und kostengünstiger Weise ermöglicht.

Diese Aufgabe wird erfindungsgemäß durch ein Sensorsystem zur Detektion von in Gebäuderäumen entstehenden Luft- oder Wärmeströmungen, bedingt durch geöffnete Fenster, Türen und/oder andere verschließbare Öffnungen, wie beispielsweise Lüftungskanäle, mit den Merkmalen von Anspruch 1 gelöst. Vorteilhafte Ausgestaltungen, Verbesserungen der Erfindung sind in weiteren Ansprüchen und in der nachfolgenden Beschreibung angegeben.

Das erfindungsgemäße Sensorsystem ist mit zwei oder mehr Temperatursensoren ausgestattet, die in einem Raum des Gebäudes, beispielsweise an dessen Wänden, am Fußboden, an der Decke und/oder am Fenster, getrennt voneinander angeordnet sind. Die Sensoren sind mit einer oder mehreren Verarbeitungs- und Auswerteeinheiten verbunden und kommunizieren vorzugsweise mit der Verarbeitungs- und Auswerteeinheit drahtlos.

Sind die Temperatursensoren als intelligente Sensoreinheiten, auch unter dem Begriff Smart-Sensor bekannt, mit integriertem Mikroprozessor oder Mikrocontroller ausgeführt, ist die Verarbeitungs- und Auswerteeinheit in vorteilhafter Weise in die Sensoreinheiten integriert. Diese Sensoreinheiten führen zusätzlich zur Messgrößenerfassung auch eine Signalaufbereitung und Signalverarbeitung der gemessenen Temperaturwerte aus.

Die Verarbeitungs- und Auswerteeinheit führt bei einer Detektion wenigstens eines geöffneten Fensters, einer geöffneten Tür und/oder einer anderen verschließbaren Öffnung, nachfolgend als verschließbare Raumöffnung bezeichnet, in wenigstens einer Detektionseinheit einen Vergleich der von den Sensoren ermittelten Temperaturwerte aus, wobei die Detektionseinheit die daraus ermittelte Temperaturdifferenz für eine Weiterverarbeitung und/oder Anzeige bereitstellt und/oder die Verarbeitungs- und Auswerteeinheit in einem integriertem Analysemodul eine statistische Auswertung bzw. Analyse der Temperaturwerte wenigstens eines des Temperatursensors ausführt und daraus eine nicht verschlossene Raumöffnungen detektiert.

Die Verarbeitungs- und Auswerteeinheit vergleicht die ermittelte Temperaturdifferenz in einem Bewertungsmodul mit wenigstens einem vorab definierten Grenzwert und stellt bei Überschreitung des Grenzwertes eine Meldung zur Weiterverarbeitung und/oder Anzeige einem Anzeigemodul zur Verfügung.

In einer bevorzugten Ausgestaltung des erfindungsgemäßen Sensorsystems sind für die Detektion der geöffneten Türen, Fenster oder anderen Raumöffnungen auch Zwischenpositionen bzw. Zwischenstellungen detektierbar und von der Verarbeitungs- und Auswerteeinheit weiterverarbeitbar. Dazu ermittelt wenigstens einer der Sensoren, beispielsweise mit statistischen Methoden über das Daten-Rauschverhalten, die Öffnungswinkel der verschließbaren Raumöffnungen, wobei sich aus einer Erhöhung des Rauschspektrums der Öffnungsgrad der verschließbaren Raumöffnungen ableiten lässt. Die Verarbeitungs- und Auswerteeinheit prüft beispielsweise, ob das Rauschspektrum im Normvergleich wenigstens einen weiteren variablen Grenzwert überschreitet.

Eine weitere bevorzugte Ausgestaltung der Erfindung beruht darauf, dass bei der Signalauswertung verschiedene Grenzwerte, z.B. für Temperaturdifferenzen, für statistisch ermittelbare Pegel oder für Integral-/Basis-Transformationen des gemessenen Signals, definierbar sind, um daraus graduelle Aussagen zu stark oder leicht geöffneten Fenstern bereitzustellen.

Ist im Gebäude ein HVAC (Lüftungs- und/oder Klimatisierungs-) System vorhanden, kann die Verarbeitungs- und Auswerteeinheit für die Detektion der nicht verschlossenen Raumöffnungen auch Werte aus dem HVAC-System mitverarbeiten bzw. auswerten.

Erfindungsgemäß ist die Verarbeitungs- und Auswerteeinheit dafür vorgesehen, einen Vergleich der von den Sensoren ermittelten Temperaturwerte über eine räumliche Differenzermittlung auszuführen.

Zusätzlich kann die Verarbeitungs- und Auswerteeinheit eine Integral- und/oder eine Basistransformation, z.B. mit einem Fourierspektrum als Ergebnis, der gemessenen Temperaturwerte wenigstens eines der Temperatursensoren erstellen und daraus eine nicht verschlossene Raumöffnung detektieren, wenn die Differenzermittlungen und/oder das aus der Integral- / Basistransformation bzw. Fouriertransformation ermittelte Spektrum in einem Norm-Vergleich mit demjenigen bei geschlossener Raumöffnung einen bestimmten zuvor festgelegten Grenzwert überschreitet.

In einer vorteilhaften Ausgestaltung der Erfindung erlaubt die Anordnung der Temperatursensoren innerhalb der Raumhöhe eine gute Ausnutzung der thermischen Schichtung innerhalb des Raumes, wobei dazu einer der Temperatursensoren unterhalb der halben Höhe des Raumes und ein weiterer Sensor oberhalb der halben Raumhöhe angeordnet ist, um die dort befindlichen optimalen Bedingungen der thermischen Schichten innerhalb des Raumes auszunutzen. Die Höhe, in der die Sensoren montiert sind, sollte sich um mindestens 30 cm unterscheiden, so dass vertikale Temperaturschichtungen, d.h. verschiedene horizontale Luftschichten annähernd gleicher Temperatur, jedoch von Schicht zu Schicht unterschiedlicher Temperatur, erkannt werden.

In einer bevorzugten Ausgestaltung ist einer der Sensoren vom Fenster in der Nähe der zu überwachenden Raumöffnung, beispielsweise von der Raumöffnung aus gesehen in der ersten Raumhälfte und ein zweiter Sensor in der zweiten Raumhälfte angeordnet. Dabei weisen die im Raum angeordneten Temperatursensoren in einer besonders vorteilhaften Anordnung bevorzugt einen horizontalen Abstand von wenigstens 30 cm zueinander auf, wenigstens einer der Temperatursensoren ist nicht weiter als 150 cm von der verschließbaren Raumöffnung entfernt angeordnet, also in den Raumkoordinaten bezüglich Raumhöhe, Raumbreite und Raumtiefe bzw. senkrecht, seitlich oder ober-/unterhalb zur überwachenden Raumöffnung montiert und ein weiterer Sensor befindet sich in mindestens einer Raumkoordinate weiter als einen Meter von der zu überwachenden Raumöffnung entfernt.

Eine bevorzugte Ausgestaltung beruht darauf, dass Sensor 1 vom Fenster aus gesehen in der ersten Raumhälfte und Sensor 2 in der zweiten Raumhälfte angeordnet ist.

Gemäß einer besonders vorteilhaften Ausgestaltung des erfindungsgemäßen Sensorsystems ist der Grenzwert, welcher bei Überschreitung desselben eine Meldung zur Weiterverarbeitung und/oder Anzeige bereitstellt, variabel in Abhängigkeit von einem außerhalb des Gebäudes befindlichen Temperatur- und/oder Außenwindgeschwindigkeitsmessgerätes einstellbar. Beispielsweise ist zur Ermittlung der Außentemperatur und/oder Außenwindgeschwindigkeit ein Temperaturfühler bzw. Windmesser oder eine Abfrage aus einer zur Verfügung stehenden, z.B. internetbasierten, Datenbank vorgesehen.

Nach einem weiteren der Erfindung zugrunde liegenden Gedanken ist die Verarbeitungs- und Auswerteeinheit in der Lage, eine statistische Analyse der Temperaturdaten des bzw. der im Raum angeordneten Sensor(en) auszuführen, um eine nicht verschlossene Raumöffnung zu detektieren, wenn die statistische Analyse eine Standardabweichung und/oder weitere statistische Größen ergibt, wie Lagemaße, Streuungsmaße oder Zusammenhangsmaße, wie z.B. Erwartungswert, Varianz, Schiefe, Median, unterschiedliche Quantile, Auto- und Kreuzkorrelationsmaße, Ko-Varianzen, statistische Momente beliebiger Ordnung und/oder Kumulanten, die im geeigneten Norm-Vergleich mit derjenigen bei geschlossenen Raumöffnungen bestimmte Grenzwerte erreichen bzw. überschreiten/nicht überschreiten.

Das erfindungsgemäße Sensorsystem verwendet bevorzugt energieautark arbeitende Sensoren, die beispielsweise mit wenigstens einer Batterie, einem Akkumulator, sonstigen Energiespeicher oder einer Energy-Harvesting Einheit, wie einem Solarenergiewandler oder Photohotovoltaikwandler, welche die im Raum zur Verfügung stehende Lichtenergie nutzt, ausgestattet sind.

In einer weiteren besonders vorteilhaften Ausgestaltung des erfindungsgemäßen Sensorsystems ist die Funktion der Aktualisierung der vom Sensor gemessenen Temperaturwerte, die sogenannte Update-Rate, variabel am jeweiligen Sensor einstellbar, so dass die Zeitauflösung der gemessenen Sensorsignale der durch die Raumgröße oder die Größe der im Raum vorhandenen verschließbaren Raumöffnungen bestimmten Frequenzen anpassbar sind. Die Energieversorgung mittels Energy Harvesting auf Basis eines Solarenergiewandlers hat den Vorteil, dass bei einer ausreichenden Beleuchtung des zu überwachenden Raumes die Temperaturmessung und Datenübertragung in sehr kurzen Zeitabständen erfolgen kann, ohne ein vorzeitiges Sterben/Entleeren einer Batterie / Energieversorgung im Sensor zu riskieren.

Die Erfindung wird nachfolgend an Hand der in den Figuren dargestellten Ausführungsbeispiele des erfindungsgemäßen Sensorsystems näher erläutert.

Es zeigen:
- **Fig.** 1:: ein beispielhaftes Ausführungsbeispiels des erfindungsgemäßen Sensorsystems, und
- **Fig.** 2:: ein weiteres beispielhaftes Ausführungsbeispiel des erfindungsgemäßen Sensorsystems, wobei die Sensoren über eine Drahtlosverbindung mit der Verarbeitungseinheit verbunden sind.

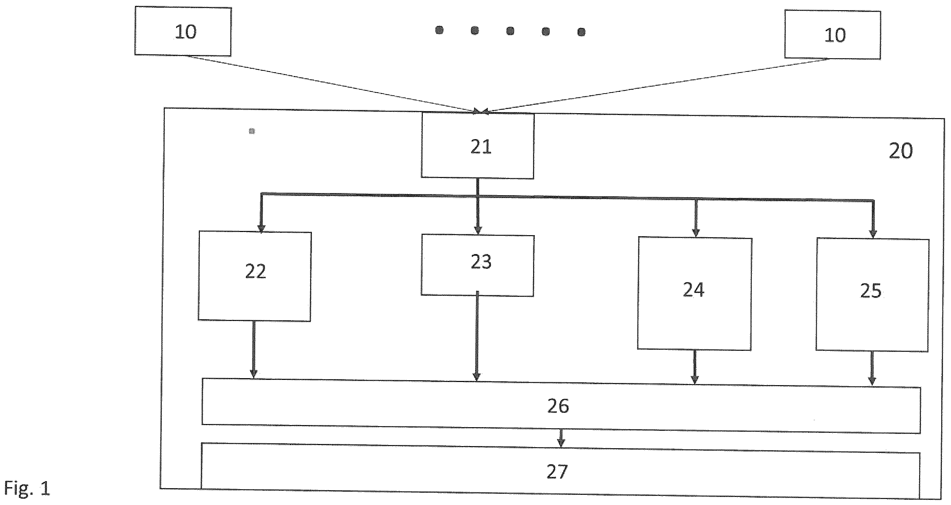

**Fig.** 1 zeigt ein Ausführungsbeispiel des erfindungsgemäßen Sensorsystems für eine Detektion entstehender Luft- oder Wärmeströmungen, bedingt durch geöffnete Fenster, Türen und/oder andere verschließbare Öffnungen in einem Gebäuderaum.

Das erfindungsgemäße Sensorsystem zur Detektion, vorzugsweise der Zustände "offen" / "geschlossen", von Fenstern, Türen und anderen verschließbaren Einrichtungen in einem Gebäude, beispielsweise in einem Büroraum, umfasst gemäß beispielhafter Ausführungsform wenigstens zwei Temperatursensoren 10, die im Gebäuderaum, an dessen Wänden, am Fußboden, an der Decke und/oder am Fenster/Tür getrennt voneinander positioniert sind. Vorzugsweise werden preisgünstige und flexibel anbringbare Temperatursensoren 10 eingesetzt, die zur Steuerung einer Klima- Lüftungs- und/oder Heizungsanlage des Gebäudes ohnehin im Gebäuderaum installiert sind.

Erfindungsgemäß sind die Sensoren 10 mit einer Verarbeitungs- und Auswerteeinheit 20 zum Sammeln der von den Temperatursensoren 10 bereitgestellten Daten, die vorzugsweise ein Gateway, ein Router oder eine webbasierte übergeordneten Recheneinheit, wie beispielsweise eine Cloud, sein kann, verbunden. Eine in der Verarbeitungs- und Auswerteeinheit 20 integrierte Einheit zur Messdatenerfassung 21 speichert die von den Sensoren 10 gemessenen Temperaturwerte stellt die Temperaturwerte zur Weiterverarbeitung einem Modul 22 zur räumlichen Differenzermittlung der gemessenen Temperaturen, einem weiteren Modul 23 zur zeitlichen Differenzermittlung der gemessenen Temperaturen und/oder einem Analysemodul 24 zur statistischen Auswertung der Temperaturmesswerte und/oder einem Modul zur Ermittlung der Integral- oder Basistransformation 25 zur Verfügung. Die Integral- oder Basistransformation kann beispielsweise eine Frequenzanalyse oder eine Fouriertransformation sein.

Somit ist die Verarbeitungs- und Auswerteeinheit 20 dafür eingerichtet, bei einer Detektion wenigstens einer geöffneten Tür, eines geöffneten Fensters und/oder einer weiteren verschließbaren Raumöffnung einen Vergleich der von den Sensoren 10 ermittelten Temperaturwerte, beispielsweise über die räumliche Differenzermittlung 22 und/oder die zeitliche Differenzermittlung 23 und/oder die Analyse zur statistischen Auswertung der Temperaturmesswerte 25 und/oder der Integral- oder Basistransformation 25 auszuführen, die daraus ermittelte Temperaturdifferenz in einem Bewertungsmodul 26 zur Detektion einer nicht verschlossenen Raumöffnung zu verarbeiten und einem Anzeigemodul 27 den Zustand der verschließbaren Raumöffnung bereitzustellen bzw. anzuzeigen.

Die Verarbeitungs- und Auswerteeinheit 20 ist in der Lage eine statistische Analyse 24 der Temperaturmesswerte des jeweiligen Temperatursensors auszuführen und eine nicht verschlossene Raumöffnung zu detektieren, wenn durch eine statistische Analyse der gemessenen Temperaturwerte eine Standardabweichung und/oder weitere statistische Größen ermittelt werden, wie Lagemaße, Streuungsmaße oder Zusammenhangsmaße, wie z.B. Erwartungswert, Varianz, Schiefe, Median, unterschiedliche Quantile, Auto- und Kreuzkorrelationsmaße, Ko-Varianzen, statistische Momente beliebiger Ordnung und/oder, Kumulanten, so daß in einem geeigneten Norm-Vergleich mit denjenigen bei geschlossenen Raumöffnungen bestimmte Grenzwerte erreicht werden.

Das in der Verarbeitungs- und Auswerteeinheit 20 integrierte Bewertungsmodul 26 ist dafür vorgesehen, die ermittelte Temperaturdifferenz mit wenigstens einem vorab definierten Grenzwert zu vergleichen und bei Überschreitung des Grenzwertes eine Meldung bezüglich einer nicht verschlossene Raumöffnung zu generieren. Für die Differenzermittlung ist vorzugsweise der Gateway oder Router des Sensorsystems eingerichtet.

Das erfindungsgemäße Sensorsystem beruht weiterhin darauf, dass eine vorteilhafte Anordnung der Temperatursensoren 10 im Gebäuderaum vorgeschlagen wird, welche eine gute Ausnutzung der thermischen Schichten innerhalb des Raumes erlaubt. Dazu ist vorgesehen, die Temperatursensoren 10 geeignet im Raum zu positionieren und die von den Sensoren 10 bereitgestellten Temperaturwerte, nachfolgend auch als Messwerte bezeichnet, aufgrund von physikalischen Betrachtungen (etwa von statischen thermischen Schichtungen, die sich durch Konvektion im Raum ausbilden, oder von thermischen Wellen, die sich aufgrund einer geöffneten Raumöffnung im Raum dynamisch ausbreiten; desweiteren kann sich das etwa im dynamischen Gleichgewicht befindliche Temperaturfeld im Raum nach Öffnung einer Raumöffnung auf charakteristische Art verändern), oder experimentellen Datenanalysen zur Detektion eines oder mehrerer geöffneter Fenster zu nutzen.

In die Analyse geht optional jeweils auch die Temperatur und/oder die Windgeschwindigkeit im Bereich vor dem Fenster bzw. außerhalb des Gebäudes ein, die beispielsweise ein Temperatur- und/oder Außenwindgeschwindigkeits- Messgerät oder eine Abfrage aus einer zur Verfügung stehenden, z.B. webbasierten, Datenbank bereitstellt.

Basierend auf nichttrivialen, klassifizierbaren thermischen Effekten, welche ein geöffnetes Fenster oder eine geöffnete Tür in einem Gebäuderaum verursachen, ermitteln die geeignet positionierten und getakteten Sensoren 10 eine sogenannte raumzeitliche Struktur, welche üblicherweise auch von der gemessenen Außentemperatur und/oder Außen-Windgeschwindigkeit abhängt. Je nach Außentemperatur und Windgeschwindigkeit ist zu erwarten, dass durch das Öffnen, beispielsweise eines Fensters, Luft in den Raum strömt, die entweder wärmer oder kälter als die im Raum vorhandene Luft ist. Kältere Luft sammelt sich wegen ihrer höheren Dichte eher am Boden und bildet eventuell einen sogenannten Kältesee, während warme Luft sich im oberen Teil des Raumes ausbreitet.

Gemäß dem erfindungsgemäßen Sensorsystem ist vorgesehen, ein infolge der Fensteröffnung verändertes statisches und/oder zeitlich periodisch veränderliches Temperaturfeld zu detektieren und in den in der Fig. 1 gezeigten mit den Bezugszeichen 22, 23, 24 bezeichneten Einheiten zu verarbeiten. Weiterhin stellt sich ein räumlicher Temperaturfeldgradient ein, meist vertikal, optional auch mit horizontalen Komponenten, dessen genauer Wert von der Differenz von den gemessenen Innen- und Außentemperatur sowie optional auch von der gemessenen Windgeschwindigkeit abhängt, sowie von Details der Raumgeometrie, beispielsweise einer geöffneten Tür.

Gemäß dem erfindungsgemäßen Sensorsystem ist weiterhin vorgesehen eine zeitliche Korrelation von deutlichen Temperaturveränderungen zu ermitteln, beispielsweise wenn ein zeitlicher Temperaturgradient an einem der Sensoren 10 über einem bestimmten Grenzwert liegt. Damit lassen sich thermische Abweichungen, wie Kälte- oder Wärmewellen durch den Raum, nachweisen und für die Zustandsbestimmung (Öffnung ganz oder teilweise geöffnet) der nicht verschlossenen Raumöffnung heranziehen bzw. mittels des Anzeigemoduls 27 zur Abbildung des Zustandes einer verschließbaren Raumöffnung darstellen.

Für die statische Temperaturgradientendetektion mittels der Einheit 22 ist vorgesehen, einen der Temperatursensoren 10 unterhalb der halben Höhe des Raumes und ein weiterer Sensor 10 oberhalb der halben Raumhöhe anzuordnen. Vorteilhaft ist es zum Beispiel in Räumen mit üblicher Höhe von bis zu 2,5 m, jedoch auch in anderen, einen der Sensoren 10 nicht höher als ca. 50 cm von Raumboden beabstandet oder direkt am Raumboden anzubringen. Die Höhe, in der die Sensoren 10 besonders vorteilhaft zueinander montiert sind, sollte sich um mindestens 30 cm unterscheiden, so dass vertikale Temperaturschichtungen, d.h. verschiedene horizontale Luftschichten annähernd gleicher Temperatur, jedoch von Schicht zu Schicht unterschiedlicher Temperatur, gut feststellbar sind.

Sind mehrere Sensoren 10 in Raum vorhanden, ist die Verarbeitungs- und Auswerteeinheit 20 in vorteilhafter Weise in der Lage ein hoch aufgelöstes und aussagekräftiges Temperaturfeld zu ermitteln, um die Identifikationszuverlässigkeit der nicht verschlossenen Raumöffnungen zu erhöhen.

Um zeitliche Korrelationen, etwa Wärme-/Kältewellen, aber auch statische horizontale Temperaturgradienten zu ermitteln, ist vorzugsweise mindestens einer der Sensoren 10 in unmittelbarer Nähe an einem Fenster anzubringen, etwa auf dem Rahmen oder an der Wand neben/ unter dem Fenster oder an der Decke, jedoch nicht weiter als etwa 150 cm von der Fensteröffnung entfernt. Ebenso kann einer der Sensoren 10 in nicht mehr als 150 cm Entfernung von der Glasfläche des geschlossenen Fensters im Raum aufgehängt sein, beispielsweise an Möbelstücken, herabhängend von der Zimmerdecke oder an einer speziell dafür angebrachten Halterung.

Wenigstens ein weiterer Sensor 10 ist in größerer Entfernung zum Fenster zu positionieren, vorzugsweise mindestens 30 cm weiter vom Fenster weg als der in unmittelbarer Nähe am Fenster angebrachte Sensor 10.

Das Öffnen und Schließen eines Fensters bzw. auch ein dauerhaft geöffnetes Fenster führt jedoch, im Vergleich zum Normzustand "Fenster geschlossen" zu weiteren dynamischen nicht vernachlässigbaren Effekten, wie der Bildung von vorübergehenden oder fortdauernden Wirbelstrukturen, die sich im Strömungsfeld der Raumluft bilden. Auch können sich Strömungsfluktuationen, erzeugt etwa durch gegenläufige Strömungen, die wiederum z.B. von der Fenster/Türöffnung oder -schließung, der Heizung oder der Klimaanlage hervorgerufen werden, bilden. Dieses Strömungsfeld erzeugt eine korrespondierende Dynamik des Temperaturfeldes, welche mittels entsprechender Auswertemethoden, insbesondere statistischer Methoden wie oben erwähnt, vom Bewertungsmodul mit verarbeitet und zur Detektion einer nicht verschlossenen Raumöffnung herangezogen werden.

Über die vorab beschriebenen Auswertungen der von den Sensoren 10 bereitgestellten Temperaturwerte hinaus, oder anstelle dieser, wird vorgeschlagen im Modul zur Ermittlung der Integral- und/oder Basistransformation 25, beispielsweise Fourieranalysen auszuführen und auf die von den Temperatursensoren 10 bereitgestellten Daten anzuwenden. Mithilfe dieser Daten ist in vorteilhafter Weise ein Unterschied zwischen zum Beispiel einer von niederfrequenten Bewegungen dominierten Situation (beispielsweise wenn das Fenster geschlossen ist) zu einer vergleichsweise dynamischen Situation (beispielsweise wenn das Fenster offen ist oder gerade geöffnet wurde) identifizierbar.

Bekanntermaßen lässt sich eine approximierte Integral- und/oder Basistransformation auf endlichen Datensätzen mithilfe einer entsprechenden diskreten Transformation ermitteln. So lässt sich z.B. eine approximierte Fouriertransformation auf endlichen Datensätzen mithilfe einer Fast-Fourier-Transformation nach Lanczos ermitteln. Der Vergleich der transformierten Funktionen (etwa der Fourierspektren) kann mittels der bekannten L²-Norm, der Maximumsnorm oder mittels eines anderen Abstandsbegriffs im Raum der Fourierspektren erfolgen und ebenfalls entsprechend approximiert werden. Dazu ist es ausreichend, nur die von einem einzigen Sensor 10 gemessenen Temperaturwerte zu verarbeiten, jedoch macht die Nutzung weiterer im Raum befindlicher Temperatursensoren 10 die Analyse zuverlässiger.

Eine weitere vorteilhafte Ausgestaltung des erfindungsgemäßen Sensorsystems verwendet zur Detektion einer nicht verschlossenen Raumöffnung im Gebäude analog zu derjenigen mittels Integral- und/oder Basistransformationen, eine sogenannte Rauschanalyse der gemessenen Temperaturwerte, wobei beispielsweise eine driftbereinigte Standardabweichung und/oder die Varianz des Temperaturmesssignals und/oder eine andere statistische Größe, wie vorab erwähnt, auf einem zuvor festgelegten Zeitintervall bestimmbar ist.

Ein mittels vorab durchgeführter Kalibrierungsmessung, Labormessungen oder Vor-Ort Kalibrierung ermittelter weiterer Grenzwert, der die Zustände "Fenster geöffnet" "Fenster geschlossen" voneinander trennt, ist in Form einer Hyperfläche im Raum der Messzustände bestimmbar, welche die Zustände mit offenem Fenster und diejenigen mit geschlossenem Fenster voneinander trennt.

Weist das Sensorsystem keinen Außenfühler auf, sind zunächst Unterschiede zu einem Normalzustand (entsprechend einem geschlossenen Fenster) zu bestimmen, wobei der Normalzustand ab Werk oder Vor- Ort definiert werden kann. Das Sensorsystem bzw. seine Verarbeitungs- und Auswerteeinheit 20 generiert daraus die Meldung ob die Fenster des Raumes geschlossen sind oder ob ein oder mehrere Fenster offen sind.

Die mit der Erfindung erzielbaren Vorteile liegen insbesondere darin, das die Identifikationssicherheit von geöffneten verschließbaren Gebäude- oder Raumöffnungen verbesserbar ist, indem wie vorab dargestellt, die Außentemperatur und/oder die Außen-Windgeschwindigkeit in die Verarbeitung der ermittelten Temperaturwerte mit einbezogen werden. Beispielsweise ist eine Identifikation ausführbar, ob ein im Gebäuderaum detektierter Temperaturgradient dem für diese Außentemperatur und/oder Außen-Windgeschwindigkeit erwarteten Verhalten entspricht. Insbesondere kann dann im Bedarfsfall mit höherer Sicherheit eine Aussage getroffen werden, ob im betreffenden Raum die Fenster stark oder nur leicht geöffnet sind.

In der Figur sind beispielhaft die vorab genannten Vorgehensweisen zur Detektion von in den Gebäuderäumen entstehenden Luft- oder Wärmeströmungen, bedingt durch geöffnete Fenster, Türen und/oder anderen verschließbaren Öffnungen mittels der im Raum getrennt voneinander positionierten Temperatursensoren 10 zur Ermittlung von Temperaturdifferenzen und/oder deren Vergleich mit vorgebbaren Grenzwerten, dargestellt. Ein daraus im Bewertungsmodul 26 entwickelter Informations-Fusions-Plan stellt ein gewichtetes und zuverlässiges Mittel von Wahrscheinlichkeitseinschätzungen, ob ein Fenster offen ist oder nicht, bereit. Die Fusionsprozedur, zum Beispiel mit ihren Gewichtungsfaktoren, ist in Anhängigkeit von der Außentemperatur, der Außen-Windgeschwindigkeit und/oder von weiteren, vorzugsweise online-verfügbaren Parametern, wie der Windrichtung, oder von Heizungs-Lüftungs-Statusdaten und/oder Sonneneinstrahlung adaptiv gestaltbar.

Das vorab beschriebene erfindungsgemäße Sensorsystem ist vorteilhafterweise auch zur Detektion von geöffneten Außentüren anwendbar, wobei anstatt des Temperatur- und/oder Außenwindgeschwindigkeitsmessgerätes ein Temperatur- und/oder Windgeschwindigkeitsmessgerät, vorzugsweise im Korridor, Vorraum oder dem Nachbarraum zu positionieren ist.

Um die Genauigkeit der Detektion noch weiter zu verbessern, wird vorgeschlagen, weitere Temperatursensoren 10 mit einzubeziehen, beispielsweise Temperatursensoren 10 jeweils in der Nähe von vorhandenen Klimaanlagen und/oder einer Heizung, sowie wenigstens ein in der Raummitte aufgehängter Sensor 10, von denen weitere Daten bezüglich der im Raum vorhandenen Wärmeschichtungen, Wärmewellen und/oder die vorab erwähnten dynamischen Indikatoren für die Zustände "Fenster geöffnet/geschlossen" ermittelbar und verarbeitbar sind.

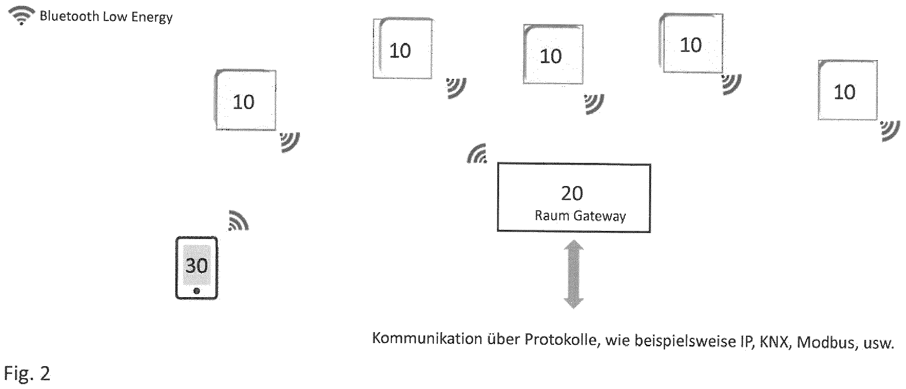

**Fig.** 2 zeigt ein weiteres beispielhaftes Ausführungsbeispiel des erfindungsgemäßen Sensorsystems, wobei die Sensoren (10) über eine Drahtlosverbindung mit der als Raum Gateway ausgeführten Verarbeitungseinheit 20 verbunden sind.

Weiterhin sind die Sensoren (10) und/oder der Gateway mit einem mobilen Endgerät, beispielsweise einem Mobiltelefon oder einem Tablet- PC verbunden, über dessen Applikationen bzw. Datenbanken Temperatur- und/oder Außenwindgeschwindigkeiten der Verarbeitungseinheit 20 zur Verfügung gestellt werden.

### Bezugszeichenliste

- 10: Temperatursensor
- 20: Verarbeitungs- und Auswerteeinheit
- 21: Einheit zur Messdatenerfassung
- 22: Detektionseinheit, Modul zur räumlichen Differenzermittlung der gemessenen Temperaturen
- 23: Detektionseinheit, Modul zur zeitlichen Differenzermittlung der gemessenen Temperaturen
- 24: Analysemodul zur statistischen Auswertung der Temperaturmesswerte
- 25: Modul zur Ermittlung der Integraltransformation
- 26: Bewertungsmodul zur Detektion einer nicht verschlossenen Raumöffnung
- 27: Anzeigemodul zur Abbildung des Zustandes einer verschließbaren Raumöffnung
- 30: mobiles Endgerät

## Patentansprüche

1. Sensorsystem zur Detektion von in Gebäuderäumen entstehenden Luft- oder Wärmeströmungen, bedingt durch geöffnete Fenster, Türen und/oder anderen verschließbaren Öffnungen in einem Gebäude, nachfolgend verschließbare Raumöffnungen genannt, mit zwei oder mehr Temperatursensoren (10), die in einem Raum des Gebäudes, beispielsweise an dessen Wänden, am Fußboden, an der Decke und/oder am Fenster, getrennt voneinander anordenbar sind, und mit wenigstens einer Verarbeitungs- und Ausewerteeinheit, wobei die Sensoren (10) mit der wenigstens einen Verarbeitungs- und Auswerteeinheit (20) verbunden sind, welche bei einer Detektion wenigstens einer geöffneten Raumöffnung in wenigstens einer Detektionseinheit (22, 23) einen Vergleich der von den Sensoren (10) ermittelten Temperaturwerte ausführt, wobei die Detektionseinheit (22, 23) die aus dem Vergleich ermittelte Temperaturdifferenz für eine Weiterverarbeitung und/oder Anzeige bereitstellt und/oder die Verarbeitungs- und Auswerteeinheit (20) in einem integrierten Analysemodul (24) eine statistische Auswertung der Temperaturwerte wenigstens eines der Temperatursensoren ausführt und/oder die Verarbeitungs- und Auswerteeinheit (20) in einem weiteren integriertem Analysemodul (25) eine approximierte Integral- und/oder Basistransformation der gemessenen Temperaturwerte ausführt, und daraus wenigstens eine nicht verschlossene Raumöffnung detektiert, wobei mittels der Detektionseinheit (22, 23) der Vergleich der von den Sensoren (10) ermittelten Temperaturwerte über eine räumliche Differenzermittlung erfolgt.

2. Sensorsystem nach Anspruch 1, **dadurch gekennzeichnet, dass** die Verarbeitungs- und Auswerteeinheit (20) die ermittelte Temperaturdifferenz im Bewertungsmodul (26) mit wenigstens einem vorab definierten Grenzwert vergleicht und bei Überschreitung des Grenzwertes eine Meldung zur Weiterverarbeitung und/oder Anzeige einem Anzeigemodul (27) bereitstellt.

3. Sensorsystem nach Anspruch 1 oder 2, **dadurch gekennzeichnet, dass** mittels der Detektionseinheit (22, 23) der Vergleich der von den Sensoren (10) ermittelten Temperaturwerte zusätzlich über eine zeitliche Differenzermittlung erfolgt.

4. Sensorsystem nach einem der Ansprüche 1-3, **dadurch gekennzeichnet, dass** die statistische Analyse der Temperaturwerte des Temperatursensors eine nicht verschlossene Raumöffnung detektiert, wenn die statistische Analyse eine Standardabweichung und/oder weitere statistische Größen, wie Lagemaße, Streuungsmaße oder Zusammenhangsmaße, wie z.B. Erwartungswert, Varianz, Schiefe, Median, unterschiedliche Quantile, Auto- und Kreuzkorrelationsmaße, Ko-Varianzen, statistische Momente beliebiger Ordnung und/oder Kumulanten im geeigneten Norm-Vergleich mit derjenigen bei geschlossenen Raumöffnungen bestimmte Grenzwerte erreichen.

5. Sensorsystem nach einem der vorstehenden Ansprüche, **dadurch gekennzeichnet, dass** die Verarbeitungs- und Auswerteeinheit (20) mittels einer Integraltransformation ein Spektrum der gemessenen Temperaturwerte wenigstens eines der Temperatursensoren (10) ermittelt und daraus eine nicht verschlossene Raumöffnung detektierbar ist, wenn die aus der Integraltransformation ermittelte transformierte Funktion, etwa ein Frequenzspektrum, im geeigneten Norm-Vergleich mit derjenigen bei geschlossener Raumöffnung einen bestimmten Grenzwert überschreitet.

6. Sensorsystem nach einem der vorstehenden Ansprüche, **dadurch gekennzeichnet, dass** die Temperatursensoren (10) in einem vertikalen Abstand von wenigstens 30 cm voneinander angeordnet sind.

7. Sensorsystem nach einem der vorstehenden Ansprüche, **dadurch gekennzeichnet, dass** die Verarbeitungs- und Auswerteeinheit (20) für die Detektion der nicht verschlossenen Raumöffnungen Werte aus einem HVAC-System verarbeitet.

8. Sensorsystem nach einem der Ansprüche 2-7, **dadurch gekennzeichnet, dass** der Grenzwert, welcher bei Überschreitung desselben eine Meldung zur Weiterverarbeitung und/oder Anzeige bereitstellt, variabel in Abhängigkeit mittels eines außerhalb des Gebäudes befindlichen Temperatur- und/oder Außenwindgeschwindigkeitsmessgerätes einstellbar ist.

9. Sensorsystem nach Anspruch 8, **dadurch gekennzeichnet, dass** zur Ermittlung der Außentemperatur und/oder Außenwindgeschwindigkeit ein Temperaturfühler, ein Windmesser und/oder eine Abfrage aus einer zur Verfügung stehenden Datenbank vorgesehen ist.

10. Sensorsystem nach einem der vorstehenden Ansprüche, **dadurch gekennzeichnet, dass** die Sensoren (10) den Öffnungsgrad der nicht verschlossenen Raumöffnungen mittels einer Rauschanalyse ermitteln, indem wenigstens einen weiterer variabler Grenzwert zur Verarbeitung, zum Normvergleich, und/oder zur Anzeige bereitgestellt wird.

11. Sensorsystem nach einem der vorstehenden Ansprüche, **dadurch gekennzeichnet, dass** eine Aktualisierung der vom Sensor (10) gemessenen Temperaturwerte variabel am Sensor (10) einstellbar ist, so dass die Zeitauflösung der gemessenen Sensorsignale an die durch die Raumgröße oder die Größe der im Raum vorhandenen verschließbaren Raumöffnungen bestimmten Frequenzen anpassbar sind.

12. Sensorsystem nach einem der vorstehenden Ansprüche, **dadurch gekennzeichnet, dass** die Sensoren (10) drahtlos mit der Verarbeitungs- und Auswerteeinheit (20) kommunizieren.

13. Sensorsystem nach einem der vorstehenden Ansprüche, **dadurch gekennzeichnet, dass** die Sensoren (10) energieautark arbeiten und mit wenigstens einer Batterie oder einer Energy-Harvesting Einheit, beispielsweise einem Solarenergiewandler, ausgestattet sind.

## Claims

1. Sensor system for detecting air or heat flows in rooms of a building caused by open windows, doors and/or other closable openings in a building, called closable room openings below, having two or more temperature sensors (10) which can be arranged separately from one another in a room of the building, for example on its walls, on the floor, on the ceiling and/or on the window, and having at least one processing and evaluation unit, wherein the sensors (10) are connected to the at least one processing and evaluation unit (20) which, if at least one open room opening is detected in at least one detection unit (22, 23), compares the temperature values determined by the sensors (10), wherein the detection unit (22, 23) provides the temperature difference determined from the comparison for further processing and/or display, and/or the processing and evaluation unit (20) carries out a statistical evaluation of the temperature values from at least one of the temperature sensors in an integrated analysis module (24), and/or the processing and evaluation unit (20) carries out an approximated integral and/or basic transform of the measured temperature values in a further integrated analysis module (25) and detects at least one unclosed room opening therefrom, wherein the temperature values determined by the sensors (10) are compared by means of the detection unit (22, 23) using a spatial difference determination.

2. Sensor system according to Claim 1, **characterized in that** the processing and evaluation unit (20) compares the determined temperature difference with at least one predefined limit value in the assessment module (26) and provides a display module (27) with a message for further processing and/or display if the limit value is exceeded.

3. Sensor system according to Claim 1 or 2, **characterized in that** the temperature values determined by the sensors (10) are additionally compared by means of the detection unit (22, 23) using a temporal difference determination.

4. Sensor system according to one of Claims 1-3, **characterized in that** the statistical analysis of the temperature values from the temperature sensor detects an unclosed room opening if the statistical analysis a standard deviation and/or further statistical variables, such as measures of location, measures of variation or measures of association, for example an expected value, variance, skew, median, different quantiles, measures of autocorrelation and cross-correlation, covariances, statistical moments of any desired order and/or cumulants, achieve particular limit values in the suitable norm comparison with that when the room openings are closed.

5. Sensor system according to one of the preceding claims, **characterized in that** the processing and evaluation unit (20) determines a range of the measured temperature values from at least one of the temperature sensors (10) by means of an integral transform, and an unclosed room opening can be detected therefrom if the transformed function determined from the integral transform, for instance a frequency range, exceeds a particular limit value in the suitable norm comparison with that when the room opening is closed.

6. Sensor system according to one of the preceding claims, **characterized in that** the temperature sensors (10) are arranged at a vertical distance of at least 30 cm from one another.

7. Sensor system according to one of the preceding claims, **characterized in that** the processing and evaluation unit (20) processes values from an HVAC system in order to detect the unclosed room openings.

8. Sensor system according to one of Claims 2-7, **characterized in that** the limit value, which provides a message for further processing and/or display when exceeded, can be variably adjusted on the basis by means of a temperature and/or outside wind speed measuring device which is outside the building.

9. Sensor system according to Claim 8, **characterized in that** a temperature sensor, an anemometer and/or a query from an available database is/are provided for the purpose of determining the outside temperature and/or outside wind speed.

10. Sensor system according to one of the preceding claims, **characterized in that** the sensors (10) determine the degree of opening of the unclosed space openings by means of a noise analysis by providing at least one further variable limit value for processing, for the norm comparison and/or for display.

11. Sensor system according to one of the preceding claims, **characterized in that** an update of the temperature values measured by the sensor (10) can be variably adjusted at the sensor (10), with the result that the time resolution of the measured sensor signals can be adapted to the frequencies determined by the size of the room or the size of the closable room openings present in the room.

12. Sensor system according to one of the preceding claims, **characterized in that** the sensors (10) communicate wirelessly with the processing and evaluation unit (20).

13. Sensor system according to one of the preceding claims, **characterized in that** the sensors (10) operate in an energy-autonomous manner and are equipped with at least one battery or an energy-harvesting unit, for example a solar energy converter.

## Revendications

1. Système de capteurs destiné à la détection d'écoulements d'air ou de chaleur générés dans des pièces de bâtiment à cause de fenêtres, portes et/ou autres ouvertures pouvant être fermées qui sont restées ouvertes dans un bâtiment, lesquelles sont désignées ci-après par ouvertures de pièce pouvant être fermées, ledit système de capteurs comprenant au moins deux capteurs de température (10) qui peuvent être disposés dans une pièce du bâtiment, par exemple sur des murs, au sol, au plafond et/ou sur la fenêtre, séparément les uns des autres, et au moins une unité de traitement et d'évaluation, les capteurs (10) étant reliés à l'au moins une unité de traitement et d'évaluation (20) qui effectue une comparaison des valeurs de température déterminées par les capteurs (10) lorsqu'au moins une ouverture de pièce ouverte est détectée dans au moins une unité de détection (22, 23), l'unité de détection (22, 23) délivrant la différence de température, déterminée à partir de la comparaison, en vue d'un traitement ultérieur et/ou d'un affichage et/ou l'unité de traitement et d'évaluation (20) effectuant une évaluation statistique des valeurs de température de l'un au moins des capteurs de température dans un module d'analyse intégré (24) et/ou l'unité de traitement et d'évaluation (20) effectuant une transformation intégrale et/ou de base par approximation des valeurs de température mesurées dans un autre module d'analyse intégré (25) et détectant à partir de là au moins une ouverture de pièce qui n'est pas fermée, l'unité de détection (22, 23) effectuant la comparaison des valeurs de température, déterminées par les capteurs (10), par une détermination de différence spatiale.

2. Système de capteurs selon la revendication 1, **caractérisé en ce que** l'unité de traitement et d'évaluation (20) compare dans le module d'évaluation (26) la différence de température déterminée avec au moins une valeur limite prédéfinie et, si la valeur limite est franchie vers le haut, délivre un message à un module d'affichage (27) en vue du traitement ultérieur et/ou de l'affichage.

3. Système de capteurs selon la revendication 1 ou 2, **caractérisé en ce que** l'unité de détection (22, 23) effectue en outre la comparaison des valeurs de température déterminées par les capteurs (10) par une détermination de différence temporelle.

4. Système de capteurs selon l'une des revendications 1 à 3, **caractérisé en ce que** l'analyse statistique des valeurs de température du capteur de température détecte une ouverture de pièce qui n'est pas fermée si l'analyse statistique un écart-type et/ou d'autres grandeurs statistiques, telles que des dimensions de position, les dispersions ou les connexions, telles que par exemple la valeur attendue, la variance, la dissymétrie, la médiane, les différents quantiles, les mesures d'auto-corrélation et de corrélation croisée, les covariances, les moments statistiques de tout ordre et/ou les cumulants atteignent des valeurs limites dans une comparaison standard appropriée avec celles d'ouvertures de pièce fermées.

5. Système de capteurs selon l'une des revendications précédentes, **caractérisé en ce que** l'unité de traitement et d'évaluation (20) détermine au moyen d'une transformation intégrale un spectre de valeurs de température mesurées de l'un au moins des capteurs de température (10) et une ouverture de pièce non fermée peut être détectée à partir de celui-ci si la fonction transformée déterminée à partir de la transformation intégrale, par exemple un spectre de fréquences, franchit vers le haut une valeur limite déterminée dans une comparaison standard appropriée avec celle d'une ouverture de pièce fermée.

6. Système de capteurs selon l'une des revendications précédentes, **caractérisé en ce que** les capteurs de température (10) sont disposés à une distance verticale d'au moins 30 cm les uns des autres.

7. Système de capteurs selon l'une des revendications précédentes, **caractérisé en ce que** l'unité de traitement et d'évaluation (20) traite des valeurs d'un système HVAC en vue de la détection d'ouvertures de pièce qui n'ont pas été fermées.

8. Système de capteurs selon l'une des revendications 2 à 7, **caractérisé en ce que** la valeur limite, qui produit, lorsque celle-ci est franchie vers le haut, un message en vue du traitement ultérieur et/ou de l'affichage, peut être réglée de manière variable en fonction au moyen d'un dispositif de mesure de température et/ou de vitesse de vent extérieur situé à l'extérieur du bâtiment.

9. Système de capteurs selon la revendication 8, **caractérisé en ce qu'**un capteur de température, un anémomètre et/ou une requête d'une base de données disponible sont prévus pour déterminer la température extérieure et/ou la vitesse de vent extérieur.

10. Système de capteurs selon l'une des revendications précédentes, **caractérisé en ce que** les capteurs (10) déterminent le degré d'ouverture des ouvertures de pièce non fermées au moyen d'une analyse de bruit **en ce qu'**au moins une autre valeur limite variable est produite pour le traitement, la comparaison standard et/ou l'affichage.

11. Système de capteurs selon l'une des revendications précédentes, **caractérisé en ce qu'**une actualisation des valeurs de température mesurées par le capteur (10) est réglable de manière variable au niveau du capteur (10) de sorte que la résolution temporelle des signaux de capteur mesurés peut être adaptée à des fréquences déterminées par la dimension de la pièce ou la dimension des ouvertures de pièce pouvant être fermées qui sont présentes dans la pièce.

12. Système de capteurs selon l'une des revendications précédentes, **caractérisé en ce que** les capteurs (10) communiquent sans fil avec l'unité de traitement et d'évaluation (20).

13. Système de capteurs selon l'une des revendications précédentes, **caractérisé en ce que** les capteurs (10) fonctionnent de manière autonome en énergie et sont équipés d'au moins une batterie ou d'une unité de récupération d'énergie, par exemple un convertisseur d'énergie solaire.
